# EUROPÄISCHE PATENTSCHRIFT

(11) **EP 2 730 014 B1**
(45) Veröffentlichungstag und Bekanntmachung des Hinweises auf die Patenterteilung: **22.11.2017**
(21) Anmeldenummer: 12721274.4
(22) Anmeldetag: 14.05.2012
(51) Int. Cl.: H02M 3/156, H02M 3/335, H02M 1/44

(54) **SCHALTWANDLER UND VERFAHREN ZU SEINER REGELUNG**
SWITCH MODE CONVERTER AND METHOD FOR CONTROLLING IT
CONVERTISSSEUR DE CC ET SON PROCEDE DE REGULATION

(30) Priorität: 07.07.2011 EP 11172970
(43) Veröffentlichungstag der Anmeldung: 14.05.2014
(73) Patentinhaber: Siemens Aktiengesellschaft, 80333 München (DE)
(72) Erfinder: PORTISCH, Daniel, A-2170 Kleinhadersdorf (AT)
(74) Vertreter: Maier, Daniel Oliver
(86) Internationale Anmeldenummer: PCT/EP2012/058868
(87) Internationale Veröffentlichungsnummer: WO 2013/004421

(56) Entgegenhaltungen:
- EP-A2- 2 264 881
- ZENG HULONG ET AL: "An adaptive blanking time control scheme for audible noise free quasi resonant Flyback converter", ENERGY CONVERSION CONGRESS AND EXPOSITION (ECCE), 2010 IEEE, IEEE, PISCATAWAY, NJ, USA, 12. September 2010 (2010-09-12), Seiten 1104-1109, XP031787071, ISBN: 978-1-4244-5286-6
- SANG HEE KANG ET AL: "On-line efficiency optimization in flyback dc-dc converters over wide ranges of operating conditions", APPLIED POWER ELECTRONICS CONFERENCE AND EXPOSITION (APEC), 2011 TWENTY-SIXTH ANNUAL IEEE, IEEE, 6. März 2011 (2011-03-06), Seiten 1417-1424, XP032014062, DOI: 10.1109/APEC.2011.5744778 ISBN: 978-1-4244-8084-5

## Beschreibung

Die Erfindung betrifft ein Verfahren zur Regelung eines Schaltwandlers in einem quasiresonanten Betrieb, wobei einem PWM-Kontroller zur Bestimmung eines Abschaltzeitpunkts eines Schaltelements eine Sense-Spannung vorgegeben wird und wobei ein Einschaltzeitpunkt des Schaltelements in ein Valley einer am abgeschalteten Schaltelement anliegenden, schwingenden Spannung fällt. Zudem betrifft die Erfindung einen Schaltwandler für quasiresonantes Schalten, wobei einem PWM-Kontroller zur Bestimmung eines Abschaltzeitpunkts eine Sense-Spannung und eine Regler-Ausgangsspannung zugeführt sind und wobei eine Vally-Switch-Regelung zur Bestimmung eines Einschaltzeitpunktes vorgesehen ist.

Schaltelemente (z.B. Feldeffekttransistoren), Transformatoren oder Drosseln enthalten parasitäre Kapazitäten, welche zu Schaltverlusten bei hart schaltenden Wandlern führen. Bei einem hart schaltenden Wandler schwingt während der Totzeit im diskontinuierlichen Modus (DCM) die parasitäre Kapazität mit einer Wandlerhauptwicklung um eine Eingangsspannung bzw. Zwischenkreisspannung. Die Spannung an den parasitären Kapazitäten variiert mit der Schwingung, weist aber durchgehend signifikante Werte auf. Wenn das Schaltelement im nächsten Taktzyklus einschaltet, werden die parasitären Kondensatoren über den Transistor entladen und erzeugen dabei eine hohe Stromspitze. Da diese auftritt, wenn am Schaltelement eine hohe Spannung anliegt, erzeugt sie Schaltverluste. Darüber hinaus ist die Stromspitze reich an Oberwellen, was die EMI erhöht.

Statt mit einem festen Takt zu schalten, wird bei quasiresonantem Schalten mittels eines Erkennungskreises ein Minimum (auch "Valley" genannt) der Drain-Source-Spannung des Schaltelements effektiv erfasst und das Schaltelement erst zu diesem Zeitpunkt eingeschalten. Dadurch wird die Einschaltstromspitze minimiert, da die parasitäre Kapazität auf die Mindestspannung geladen ist. Diese Art des Schaltens wird allgemein als Valley-Switching, Nulldurchgangsschalten oder quasiresonantes Schalten bezeichnet. Es führt zu einer Reduktion der Schaltverluste und der Störabstrahlung, welche bei hart schaltenden Wandlern auftreten. Da der Resonanzkreis nur während der Schaltübergänge an einem ansonsten herkömmlichen Rechtecksignalwandler eingesetzt wird, bezeichnet man dieses Schalten quasiresonant.

Im Folgenden wird jedes Minimum der am abgeschalteten Schaltelement anliegenden schwingenden Spannung als Valley bezeichnet. Das während einer Schaltperiode zeitlich zuerst auftretende Minimum wird als erstes Valley bezeichnet. Die nachfolgenden Valleys werden entsprechend ihrer zeitlichen Abfolge nummeriert, also zweites Valley, drittes Valley etc.

Das Einschalten während eines Valley bewirkt ein laufendes Zurücksetzen des Periodenbeginns (Impuls-Reset) und somit ein Anpassen der Schaltfrequenz unabhängig von der Last oder der Zwischenkreisspannung zu diesem Zeitpunkt. Diese Betriebsart beginnt an der Grenze zwischen kontinuierlichem (CCM) und diskontinuierlichem Leitungsmodus (DCM) und kommt im diskontinuierlichen Leitungsmodus voll zum Tragen.

Für den Fall, dass immer während des gleichen Valley (z.B. immer beim ersten Valley) eingeschaltet wird, steigt mit sinkender Last die Schaltfrequenz, bis im Leerlauf eine Maximalfrequenz erreicht wird. Mit steigender Frequenz steigen jedoch auch die Schaltverluste, da pro Zeiteinheit mehr verlustbringende Schaltvorgänge stattfinden.

Um die zu hohe Schaltfrequenz bei wenig Last zu vermeiden, wird in der Regel der Einschaltzeitpunkt auf ein späteres Valley verlegt (z.B. auf das zweite Valley). Nachteilig ist dabei die sprunghafte Umschaltung, die einen instabilen Zustand der Regelung hervorruft. Zur Regelung einer konstanten Ausgangsspannung wird in einem solchen Übergangsbereich mit jedem Schaltzyklus zwischen zwei Valleys hin und her gesprungen. Dieser Effekt wird auch "Valley-Skipping" genannt. Eine solche Reglerschwingung ist meist hörbar und hat höhere Verlustleistungen zur Folge.

Der Erfindung liegt die Aufgabe zugrunde, für eine Verfahren und einen Schaltwandler der eingangs genannten Art eine Verbesserung gegenüber dem Stand der Technik anzugeben.

Erfindungsgemäß wird diese Aufgabe gelöst durch ein Verfahren gemäß Anspruch 1 und einen Schaltwandler gemäß Anspruch 6. Weiterbildungen sind in abhängigen Ansprüchen angegeben.

Dabei wird zur Vermeidung von Valley-Skipping bei jedem nach einem Abschaltvorgang auftretenden Valley die Sense-Spannung reduziert. Die im abgeschalteten Zustand des Schaltelements ohne diese Maßnahme konstant bleibende Sense-Spannung wird demnach während eines Schaltzyklus einmal reduziert, wenn der Schaltwandler im ersten Valley einschaltet. Wird im zweiten Valley eingeschaltet, reduziert sich die Sense-Spannung zweimal. Beim Einschalten im dritten Valley erfolgen drei Reduzierungen der Sense-Spannung usw.

Mit jeder Reduzierung sinkt das Spannungsniveau, von dem aus die Sensespannung bei eingeschaltetem Schaltelement ansteigt. Der PWM-Kontroller schaltet ab, wenn die Sense-Spannung den mittels einer Regler-Ausgangsspannung bestimmten Wert erreicht. Mit unveränderter Regler-Ausgangsspannung führt die reduzierte Sense-Spannung demnach zu einem späteren Abschalten. Damit steigt die vom Schaltwandler übertragene Leistung an.

Sobald aufgrund einer vorgegebenen Leistungsreduktion die maximal zulässige Schaltfrequenz erreicht wird, bewirkt eine Valley-Switch Regelung ein Einschalten des Schaltelements bei einem späteren Valley. Gleichzeitig sinkt die Schaltfrequenz, weil sich die Ausschaltzeit des Schaltelements um die Periodendauer der am abgeschalteten Schaltelement anliegenden, schwingenden Spannung verlängert. Aufgrund der erfindungsgemäßen Maßnahme führt die abgesenkte Schaltfrequenz zu keiner Leistungsreduktion. Vielmehr bewirkt das spätere Abschalten infolge der reduzierten Sense-Spannung zu einem Leistungsanstieg. Der Spannungsregler des Schaltwandlers kompensiert diesen Leistungsanstieg durch ein Absenken der Regler-Ausgangsspannung. Es erfolgt also kein Sprung zurück zu einem frühren Valley. In der gleichen Weise wird Valley-Skipping bei einer ansteigenden Leistung vermieden. Sobald ein vorgegebener Leistungsanstieg zu einem Einschalten bei einem frühres Valley führt, sinkt infolge des erfindungsgemäßen Eingriffs die übertragen Leistung ab. Der Spannungsregler erhöht die Regler-Ausgangsspannung, bis die vorgegeben Leistung erreicht ist, ohne zu dem später auftretenden Valley zurückzuspringen.

In einer vorteilhaften Weiterbildung wird bei jedem auftretenden Valley eine Hilfsspannung reduziert und die Sense-Spannung wird durch Summierung der Hilfsspannung und einer zum Strom durch das Schaltelement proportionalen Messspannung gebildet. Auf diese Weise ist eine einfache Reduktion der Sense-Spannung gegeben.

Dabei ist es zudem von Vorteil, wenn mittels eines Analogzählers aus einem Ausgangssignal eines Valley-Erkennungskreises die Hilfsspannung gebildet wird, welche bei jedem auftretenden Valley reduziert wird. Der Analogzähler zählt die während eines Schaltzyklus auftretenden Valleys in der Weise, dass bei jedem auftretenden Valley eine Spannungsreduktion erfolgt.

Des Weiteren ist günstigerweise vorgesehen, dass mittels einer Nulldurchgangserkennung die Nulldurchgänge einer an einer Hilfswicklung anliegenden Spannung detektiert werden und dass aus dem resultierenden Nulldurchgangssignal mittels des Analogzählers die sich bei jedem auftretenden Valley reduzierende Hilfsspannung gebildet wird.

Ein vorteilhaftes Verfahren sieht zudem vor, dass der Analogzähler nach jedem Schaltzyklus mittels eines am Steuerausgang des PWM-Kontrollers anliegenden Schaltsignals zurückgesetzt wird.

Beim erfindungsgemäßen Schaltwandler ist das Signal am Ausgang des Valley-Erkennungskreises einer Schaltung zur Reduzierung der Sense-Spannung zugeführt.

Dabei ist es vorteilhaft, wenn der Valley-Erkennungskreis als eine Nulldurchgangserkennung ausgeführt ist, welcher eine an einer Hilfswicklung anliegende Spannung zugeführt ist.

Eine Weiterbildung sieht vor, dass die Schaltung zur Reduzierung der Sense-Spannung einen Analogzähler und einen Summierer umfasst, dass das Signal am Ausgang des Valley-Erkennungskreises dem Analogzähler zugeführt ist und dass eine Hilfsspannung am Ausgang des Analogzählers und eine zum Strom durch das Schaltelement proportionale Messspannung dem Summierer zugeführt sind. Auf diese Weise ist ein einfacher Aufbau mit wenigen Bauteilen sichergestellt.

Für einen einfachen Reset-Vorgang ist dem Analogzähler ein am Steuerausgang des PWM-Kontrollers anliegendes Schaltsignal zugeführt, um nach jedem Schaltzyklus ein Zurücksetzen des Analogzählers herbeizuführen.

Die Erfindung wird nachfolgend in beispielhafter Weise unter Bezugnahme auf die beigefügten Figuren erläutert. Es zeigen in schematischer Darstellung:
- Fig. 1: Leistungsdiagramm nach dem Stand der Technik
- Fig. 2: erfindungsgemäßes Leistungsdiagramm
- Fig. 3: Schaltwandler-Blockschaltbild nach dem Stand der Technik
- Fig. 4: Blockschaltbild eines erfindungsgemäßen Schaltwandlers
- Fig. 5: Blockschaltbild mit Analogzähler und Summierer

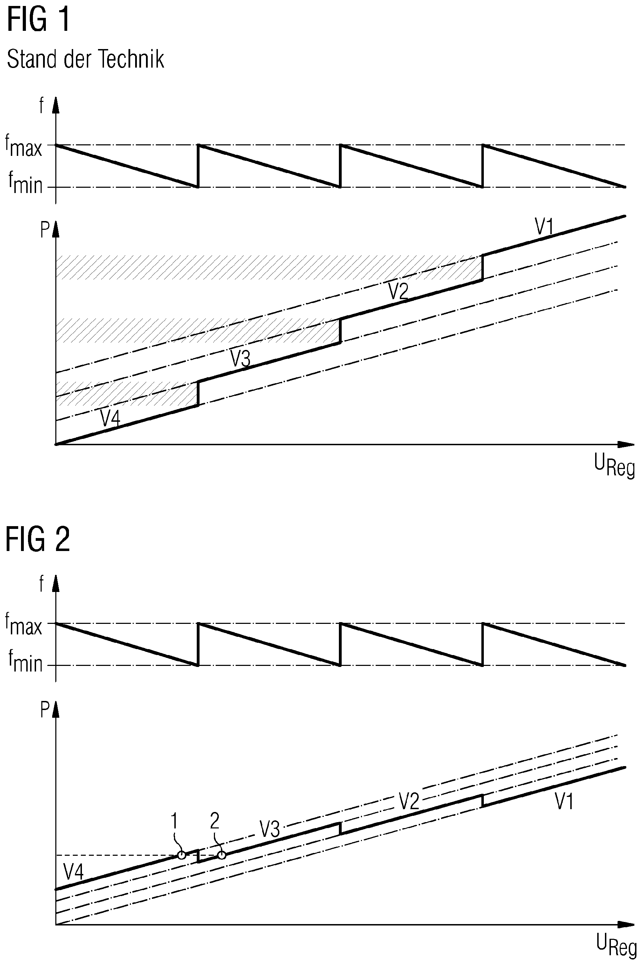

In Fig. 1 ist die Problematik bisheriger Schaltwandler ersichtlich. Bei erhöhter Last am Ausgang des Schaltwandlers steigt die Regler-Ausgangsspannung U_{Reg} und somit die übertragene Leistung P. Gleichzeitig sinkt die Schaltfrequenz f. Wenn die Schaltfrequenz f einen vorgegebenen minimalen Wert erreicht, schaltet die Valley-Switch-Regelung 3 vom z.B. vierten Valley V4 auf das z.B. dritte Valley V3. Dadurch steigt die Schaltfrequenz f und somit die übertragene Leistung P des Schaltwandlers sprunghaft an. Um den Leistungsanstieg auszugleichen, regelt der Spannungs-Regler 6 wieder zurück, indem die Regler-Ausgangsspannung U_{Reg} abgesenkt wird. Dadurch steigt die Schaltfrequenz f. Wenn die Schaltfrequenz f einen vorgegebenen maximalen Wert fₘₐₓ erreicht, schaltet die Valley-Switch-Regelung 3 wieder vom dritten Valley V3 auf das vierte Valley V4 um. Dadurch sinkt die Frequenz f und somit nimmt die übertragene Leistung P sprunghaft ab. Der Regler 6 gibt daraufhin wieder eine höhere Regler-Ausgangsspannung U_{Reg} vor. Der Vorgang wiederholt sich periodisch, es kommt zu einer Grenzzyklusschwingung mit einer typischen Schwingfrequenz von 5-15kHz. Die schraffiert dargestellten Leistungsbereiche können mit einem Schaltwandler und einem Verfahren nach dem Stand der Technik nicht stabil angefahren werden.

Fig. 2 zeigt das Diagramm mit erfindungsgemäßen Eingriffen bei einem Wechsel zwischen zwei Valleys. Steigt eine am Ausgang angeschlossene Last an, steigt auch die Regler-Ausgangsspannung U_{Reg} und somit die übertragene Leistung P des Schaltwandlers. Dabei sinkt die Schaltfrequenz f. Sobald die Schaltfrequenz f einen vorgegeben Minimalwert fₘᵢₙ erreicht, schaltet die Valley-Switch-Regelung 3 vom z.B. vierten Valley V4 auf das z.B. dritte Valley V3 um. Dadurch steigt die Schaltfrequenz f sprunghaft an. Durch den erfindungsgemäßen Eingriff in die Strommessung sinkt jedoch die vom Schaltwandler übertragene Leistung P. Infolgedessen erhöht sich die Regler-Ausgangsspannung U_{Reg}, bis die gewünschte übertragene Leistung P erreicht wird.

Verringert sich die Last am Ausgang, sinkt die Regler-Ausgangsspannung U_{Reg} und folglich auch die übertragene Leistung P. Die Schaltfrequenz f steigt an. Erreicht die Schaltfrequenz f einen vorgegebenen Maximalwert fₘₐₓ, schaltet die Valley-Switch-Regelung 3 vom z.B. dritten Valley V3 auf das z.B. vierte Valley V4 um. Die Frequenz f sinkt dabei sprunghaft. Die übertragene Leistung P des Schaltwandlers steigt jedoch infolge des erfindungsgemäßen Eingriffs in die Strommessung. Dadurch verringert der Regler 6 die Regler-Ausgangsspannung U_{Reg}, bis die gewünschte übertragene Leistung P erricht wird.

Der Spannungs-Regler 6 kann durch die erfindungsgemäßen Eingriffe sowohl bei ansteigender Last als auch bei abfallender Last immer stabile Betriebspunkte erreichen.

Im Falle einer Lasterhöhung ausgehend vom z.B. vierten Valley V4 steigt die Regler-Ausgangsspannung U_{Reg}, bis ein stabiler Betriebspunkt 1 erreicht ist.

Verringert sich die Last am Ausgang ausgehend vom z.B. dritten Valley V3, sinkt die Regler-Ausgangsspannung U_{Reg}, bis ein stabiler Betriebspunkt 2 erreicht ist.

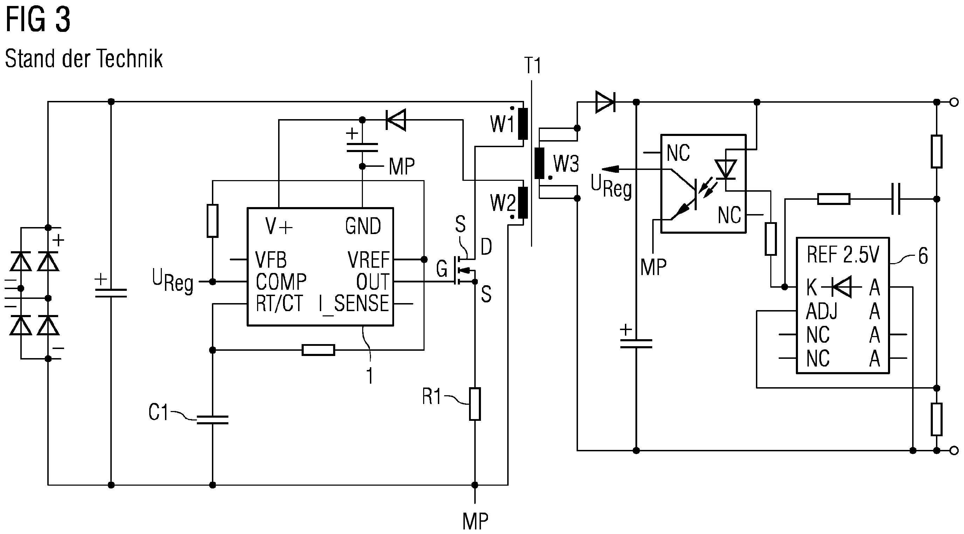

Fig. 3 zeigt einen herkömmlichen Schaltwandler. Ein Transformator T1 umfasst primärseitig eine Hauptwicklung W1 und eine Hilfswicklung W3. Über eine sekundärseitige Wicklung W3 wird Energie an den Ausgang des Schaltwandlers abgegeben.

Der primärseitig angeordnete PWM-Kontroller 1 umfasst einen Frequenzgenerator, welcher mittels einer Sägezahnspannung ein PWM-Signal generiert. Dabei wird am Beginn einer steigenden Flanke des Frequenzgenerators über einen Steuerausgang OUT das Schaltelement S eingeschaltet.

Dem PWM-Kontroller 1 ist die Regler-Ausgangsspannung U_{Reg} des Spannungsreglers 6 zugeführt. Diese Spannung U_{Reg} oder eine dazu proportionale Spannung wird mit einer Sense-Spannung mittels eines Komparators verglichen. Die Sense-Spannung gibt dabei den Strom durch das Schaltelement S an. Sobald die Sense-Spannung die Vergleichsspannung U_{Reg} übersteigt, kippt der Komparator und das Schaltelement S wird über den Steuerausgang OUT abgeschaltet.

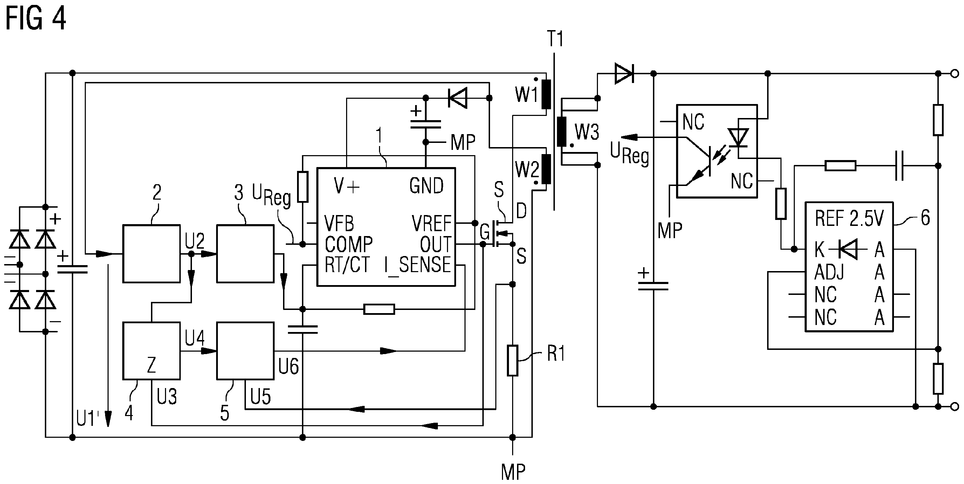

In Fig. 4 ist ein beispielhafter Aufbau für einen erfindungsgemäßen Eingriff in die Strommessung dargestellt. Dabei wird die an sich bekannte Valley-Switch-Regelung 3 eingesetzt.

Die am abgeschalteten Schaltelement S anliegende Spannung U1 schwingt hauptsächlich zwischen den Ausgangskapazitäten des Schaltelements S und der Hauptwicklung W1 mit einer ausrechend konstanten Ausschwingfrequenz. Mittels der Hilfswicklung W2 wird ein Abbild der am abgeschalteten Schaltelement S anliegenden, schwingenden Spannung erzeugt, wobei der Mittelwert dieser schwingenden Spannung einem Wert von Null Volt entspricht. Die Spannung der Hilfswicklung W2 ist als Eingangssignal einer Nulldurchgangserkennung 2 zugeführt, an deren Ausgang ein Nulldurchgangssignal U2 anliegt. Die Nulldurchgangserkennung 2 funktioniert
- mit einem Komparator, der das Eingangssignal mit Null Volt vergleicht, oder
- mit einem Komparator, der das Eingangssignal mit einer positiven oder negativen Spannung vergleicht und auf diese Weise das Nulldurchgangssignal U2 vor- bzw. nacheilend erzeugt, oder
- mit einer einfachen Transistorschaltung, oder
- mit einem CMOS-Gatter, welches den Vorteil einer sehr geringen Verzögerung aufweist, oder
- mit einer digitalen Schaltung, welche die Ausschwingfrequenz sampelt und die Nulldurchgänge errechnet.

Das Nulldurchgangssignal U2 ist der Valley-Switch-Regelung 3 zugeführt und bewirkt, dass das Schaltelement S immer bei einem Valley der am abgeschalteten Schaltelement S anliegende Spannung U1 eingeschaltet wird. Beim Einschalten wird das Wickelgut aufmagnetisiert.

Zusätzlich ist das Nulldurchgangssignal U2 einem Analogzähler 4 zugeführt. Beim Abschalten des Schaltelements S wird der Analogzähler 4 zurückgesetzt. Konkret erfolgt eine Zurücksetzung mit einer fallenden Flanke am Steuerausgang OUT des PWM-Kontrollers 1. Es kommt zum Abmagnetisieren des Wickelguts. Im Anschluss an eine Abmagnetisierungsphase beginnt die am Schaltelement S anliegende Spannung U1 auszuschwingen. Über diesen Analogzähler 4 werden die Anzahl der Valleys bis zum nächsten Einschalten des Schaltelements S gezählt und bis zum nächsten Zurücksetzen gespeichert. Diese Speicherung erfolgt in Form einer sich reduzierenden Hilfsspannung U4, welche mit der Messwertspannung U5 des Stromes summiert wird. Dies geschieht in einfacher Weise mittels eines Summierers 5. Dadurch ändert sich bei einem Sprung zwischen zwei Valleys die übertragene Leistung P des Schaltwandlers derart, dass sich der Spannungs-Regler 6 in jedem Leistungsbereich stabilisiert.

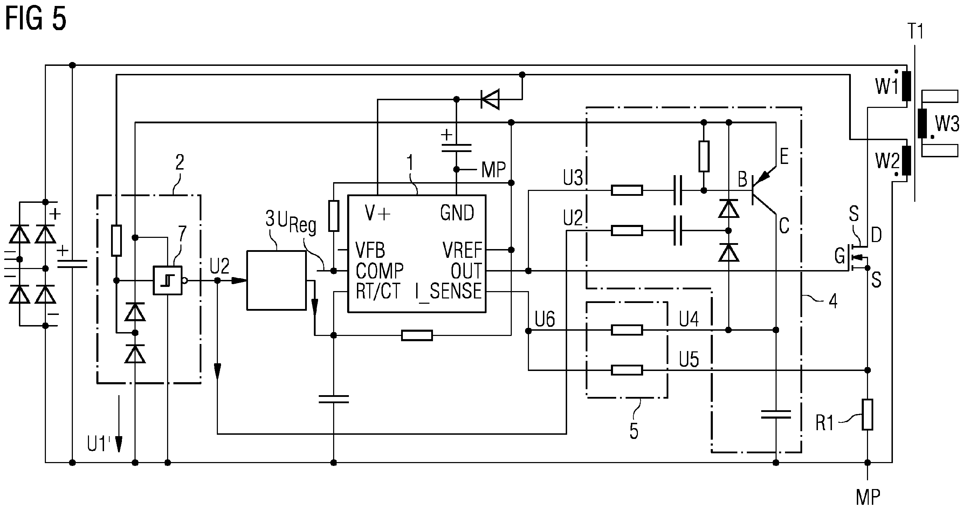

Eine detaillierte Ausführung ist in Fig. 5 gezeigt. Ein CMOS invertierendes Gatter 7 mit Schmitttriggereingang wird von einem VREF-Ausgang des PWM-Kontrollers 1 versorgt. Da die Spannung U1', welche an der Hilfswicklung W2 anliegt und ein Abbild der am abgeschalteten Schaltelement S anliegenden Spannung U1 ist, wesentlich größer sein kann als die Versorgungsspannung des Gatters 7, wird die Spannung U1' mit einem Widerstand und einer Klemmdiode auf die Versorgungsspannung des Gatters 7 begrenzt. Unterschreitet die Spannung U1' der Hilfswicklung W2 die interne Schwellspannung des Gatters 7, wird der Ausgang des Puffers 7 positiv und ein Nulldurchgang ist erkannt.

Durch die Schwellspannung wird bereits vor einem Nulldurchgang ein Signal erzeugt, wodurch es mit diesen einfachen Bauteilen möglich ist, auch bei sehr hohen Ausschwingfrequenzen einen Nulldurchgang frühzeitig zu erkennen und somit bei einem Valley einzuschalten.

Das CMOS Gatter 7 hat den Vorteil von sehr kurzen Ansprechzeiten. Somit kann ein Nulldurchgang bis zu einer Ausschwingfrequenz von einigen MHz genau genug erfasst werden.

Mit jeder fallenden Flanke der am Steuerausgang OUT des PWM-Kontrollers 1 anliegenden Schaltsignals U3 wird über einen Hochpass 8 ein Transistor 9 für eine definierte Zeit eingeschaltet. Dadurch lädt sich ein Kondensator 10 auf den Spannungswert der (z.B. 5V) am VREF-Ausgang des PWM-Kontrollers 1 anliegenden Spannung auf. Ein Widerstand 11 dient dabei zur Strombegrenzung. Damit ist der Analogzähler zurückgesetzt.

Mit jeder fallenden Flanke des Nulldurchgangssignals U2 wird der Kondensator 10 über eine Entladeschaltung 11 entladen. Das Ausmaß der Entladung wird dabei durch das Kapazitätsverhältnis des Kondensators 10 und einer Kapazität der Entladeschaltung 11 bestimmt. Günstigerweise umfasst die Entladeschaltung 11 einen Widerstand zur Strombegrenzung. Damit wird die am Kondensator 10 anliegende Hilfsspannung U4 mit jedem Nulldurchgang der an der Hilfswicklung anliegenden Spannung U1' geringer. Auf diese Weise werden die Valleys gezählt.

Die gezählten Valleys werden in Form der Hilfsspannung U4 mittels Summierers 4 mit der Messwertspannung U5, welche den Strom durch das Schaltelement S ausdrückt, summiert. Der Summierer 4 besteht im einfachsten Fall aus zwei aufeinander abgestimmten Widerständen.

Die summierte Spannung wird in weiterer Folge als modifizierte Sense-Spannung U6 dem PWM-Kontroller 1 zugeführt.

Mit der gezeigten Ausführung wird mit wenigen Bauteilen eine kostengünstige Lösung realisiert um hörbare Reglerschwingen und eine Wirkungsgradverminderung zu verhindern.

## Patentansprüche

1. Verfahren zur Regelung eines Schaltwandlers in einem quasiresonanten Betrieb, wobei einem PWM-Kontroller (1) zur Bestimmung eines Abschaltzeitpunkts eines Schaltelements (S) eine Sense-Spannung (U6) vorgegeben wird, welche bei eingeschaltetem Schaltelement (S) den Strom durch das Schaltelement (S) angibt und wobei ein Einschaltzeitpunkt des Schaltelements (S) in ein Valley (V1, V2, V3, V4) einer am abgeschalteten Schaltelement (S) anliegenden, schwingenden Spannung (U1) fällt, **dadurch gekennzeichnet, dass** bei jedem nach einem Abschaltvorgang auftretenden Valley (V1, V2, V3, V4) eine Hilfsspannung (U4) reduziert wird und dass die Sense-Spannung (U6) durch Summierung der Hilfsspannung (U4) und einer zum Strom durch das Schaltelement (S) proportionalen Messspannung (U5) gebildet wird, wodurch dann die Sense-Spannung (U6) reduziert wird, sodass bei jeder Reduzierung das Spannungsniveau sinkt, von dem aus die Sense-Spannung (U6) bei eingeschaltetem Schaltelement (S) ansteigt.

2. Verfahren nach Anspruch 1, **dadurch gekennzeichnet, dass** mittels eines Analogzählers (4) aus einem Ausgangssignal eines Valley-Erkennungskreises die Hilfsspannung (U4) gebildet wird, welche bei jedem auftretenden Valley (V1, V2, V3, V4) reduziert wird.

3. Verfahren nach Anspruch 2, **dadurch gekennzeichnet, dass** mittels einer Nulldurchgangserkennung (2) die Nulldurchgänge einer an einer Hilfswicklung (W2) anliegenden Spannung (U1') detektiert werden und dass aus dem resultierenden Nulldurchgangssignal (U2) mittels des Analogzählers (4) die sich bei jedem auftretenden Valley (V1, V2, V3, V4) reduzierende Hilfsspannung (U4) gebildet wird.

4. Verfahren nach Anspruch 2 oder 3, **dadurch gekennzeichnet, dass** der Analogzähler (4) nach jedem Schaltzyklus mittels eines am Steuerausgang (OUT) des PWM-Kontrollers (1) anliegenden Schaltsignals (U3) zurückgesetzt wird.

5. Schaltwandler für quasiresonantes Schalten, welcher zur Durchführung eines Verfahrens nach einem der Ansprüche 1 bis 4 eingerichtet ist, **dadurch gekennzeichnet, dass** einem PWM-Kontroller (1) zur Bestimmung eines Abschaltzeitpunkts eine reduzierte Sense-Spannung (U6) und eine Regler-Ausgangsspannung (U_{Reg}) zugeführt sind, dass eine Vally-Switch-Regelung (3) zur Bestimmung eines Einschaltzeitpunktes vorgesehen ist und dass das Signal am Ausgang eines Valley-Erkennungskreises einer Schaltung zur Reduzierung der Sense-Spannung (U6) zugeführt ist.

6. Schaltwandler nach Anspruch 5, **dadurch gekennzeichnet, dass** der Valley-Erkennungskreis als eine Nulldurchgangserkennung (2) ausgeführt ist, welcher eine an einer Hilfswicklung (W2) anliegende Spannung (U1') zugeführt ist.

7. Schaltwandler nach Anspruch 5 oder 6, **dadurch gekennzeichnet, dass** die Schaltung zur Reduzierung der Sense-Spannung (U6) einen Analogzähler (4) und einen Summierer (5) umfasst, dass das Signal am Ausgang des Valley-Erkennungskreises dem Analogzähler (4) zugeführt ist und dass eine Hilfsspannung (U4) am Ausgang des Analogzählers (4) und eine zum Strom durch das Schaltelement (S) proportionale Messspannung (U5) dem Summierer (5) zugeführt sind.

8. Schaltwandler nach Anspruch 7, **dadurch gekennzeichnet, dass** dem Analogzähler (4) ein am Steuerausgang (OUT) des PWM-Kontrollers (1) anliegendes Schaltsignal zugeführt ist, um nach jedem Schaltzyklus ein Zurücksetzen des Analogzählers (4) herbeizuführen.

## Claims

1. Method for controlling a switching converter in a quasi-resonant mode of operation, wherein a sense voltage (U6) is predefined for a PWM controller (1) for the purpose of determining a switch-off time of a switching element (S), which sense voltage (U6) indicates the current through the switching element (S) with the switching element (S) switched on, and wherein a switch-on time of the switching element (S) falls in a valley (V1, V2, V3, V4) of an oscillating voltage (U1) that is being applied to the switched-off switching element (S), **characterised in that** an auxiliary voltage (U4) is reduced in each valley (V1, V2, V3, V4) occurring after a switch-off operation and **in that** the sense voltage (U6) is formed by summation of the auxiliary voltage (U4) and a measurement voltage (U5) proportional to the current through the switching element (S), whereby the sense voltage (U6) is then reduced, such that with each reduction there is a drop in the voltage level starting from which the sense voltage (U6) rises with the switching element switched on (S).

2. Method according to claim 1, **characterised in that** the auxiliary voltage (U4) which is reduced in each occurring valley (V1, V2, V3, V4) is formed by means of an analogue counter (4) from an output signal of a valley detection circuit.

3. Method according to claim 2, **characterised in that** the zero crossings of a voltage (U1') present at an auxiliary winding (W2) are detected by a zero-crossing detection means (2) and **in that** the auxiliary voltage (U4) reducing in each occurring valley (V1, V2, V3, V4) is formed by means of the analogue counter (4) from the resulting zero-crossing signal (U2).

4. Method according to claim 2 or 3, **characterised in that** the analogue counter (4) is reset after each switching cycle by means of a switching signal (U3) present at the control output (OUT) of the PWM controller (1).

5. Switching converter for quasi-resonant switching, which is configured for performing a method according to one of claims 1 to 4, **characterised in that** a reduced sense voltage (U6) and a regulator output voltage (U_{Reg}) are supplied to a PWM controller (1) for the purpose of determining a switch-off time, a valley switch control means (3) is provided for determining a switch-on time, and the signal present at the output of a valley detection circuit is supplied to a circuit for reducing the sense voltage (U6).

6. Switching converter according to claim 5, **characterised in that** the valley detection circuit is implemented as a zero-crossing detection means (2) to which a voltage (U1') present at an auxiliary winding (W2) is supplied.

7. Switching converter according to claim 5 or 6, **characterised in that** the circuit for reducing the sense voltage (U6) comprises an analogue counter (4) and a summator (5), **in that** the signal present at the output of the valley detection circuit is supplied to the analogue counter (4), and **in that** an auxiliary voltage (U4) present at the output of the analogue counter (4) and a measurement voltage (U5) proportional to the current through the switching element (S) are supplied to the summator (5).

8. Switching converter according to claim 7, **characterised in that** a switching signal present at the control output (OUT) of the PWM controller (1) is supplied to the analogue counter (4) in order to effect a reset of the analogue counter (4) after each switching cycle.

## Revendications

1. Procédé de régulation d'un convertisseur dans un mode quasi-résonant, dans lequel un contrôleur PWM (1) se voit spécifier une tension de détection (U6) pour déterminer un moment de déconnexion d'un élément de commutation (S), laquelle tension, lorsque l'élément de commutation (S) est connecté, indique le courant traversant l'élément de commutation (S), et dans lequel un moment de connexion de l'élément de commutation (S) coïncide avec une vallée (V1, V2, V3, V4) d'une tension oscillante (U1) appliquée à l'élément de commutation (S) déconnecté, **caractérisé en ce que** dans chaque vallée (V1, V2, V3, V4) qui apparaît après une opération de déconnexion, une tension auxiliaire (U4) est réduite et **en ce que** la tension de détection (U6) est formée en additionnant la tension auxiliaire (U4) et une tension de mesure (U5) proportionnelle au courant traversant l'élément de commutation (S), ce qui réduit ensuite la tension de détection (U6), de telle sorte que chaque réduction entraîne une baisse du niveau de tension à partir duquel la tension de détection (U6) augmente lorsque l'élément de commutation (S) est connecté.

2. Procédé selon la revendication 1, **caractérisé en ce que,** au moyen d'un compteur analogique (4), la tension auxiliaire (U4) est formée à partir d'un signal de sortie d'un circuit de détection de vallée, laquelle tension est réduite à chaque apparition d'une vallée (V1, V2, V3, V4).

3. Procédé selon la revendication 2, **caractérisé en ce que,** au moyen d'une détection d'un passage par zéro (2), les passages par zéro d'une tension (U1') appliquée à un enroulement auxiliaire (W2) sont détectés et **en ce que** la tension auxiliaire (U4) se réduisant à chaque apparition d'une vallée (V1, V2, V3, V4) est formée à partir du signal de passage par zéro (U2) résultant au moyen du compteur analogique (4).

4. Procédé selon la revendication 2 ou 3, **caractérisé en ce que** le compteur analogique (4) est remis à zéro, après chaque cycle de commutation, au moyen d'un signal de commutation (U3) appliqué à la sortie de commande (OUT) du contrôleur PWM (1).

5. Convertisseur pour une commutation quasi-résonante, configuré pour la mise en oeuvre d'un procédé selon l'une des revendications 1 à 4, **caractérisé en ce qu'**une tension de détection (U6) réduite et une tension de sortie de régulateur (U_{Reg}) sont amenées à un contrôleur PWM (1) pour déterminer un moment de déconnexion, **en ce qu'**une régulation de commutation de vallée (3) est prévue pour déterminer un moment de connexion et **en ce que** le signal à la sortie d'un circuit de détection de vallée est amené à un circuit de réduction de la tension de détection (U6).

6. Convertisseur selon la revendication 5, **caractérisé en ce que** le circuit de détection de vallée est réalisé sous la forme d'une détection de passage par zéro (2) à laquelle est amenée une tension (U1') appliquée à un enroulement auxiliaire (W2).

7. Convertisseur selon la revendication 5 ou 6, **caractérisé en ce que** le circuit de réduction de la tension de détection (U6) comprend un compteur analogique (4) et un additionneur (5), **en ce que** le signal à la sortie du circuit de détection de vallée est amené au compteur analogique (4) et **en ce qu'**une tension auxiliaire (U4) à la sortie du compteur analogique (4) et une tension de mesure (U5) proportionnelle au courant traversant l'élément de commutation (S) sont amenées à l'additionneur (5).

8. Convertisseur selon la revendication 7, **caractérisé en ce qu'**un signal de commutation appliqué à la sortie de commande (OUT) du contrôleur PWM (1) est amené au compteur analogique (4) pour provoquer une remise à zéro du compteur analogique (4) après chaque cycle de commutation.
